# EUROPEAN PATENT APPLICATION

(11) **EP 2 945 303 A1**
(43) Date of publication of application: **18.11.2015**
(21) Application number: 14305724.8
(22) Date of filing: 16.05.2014
(51) Int. Cl.: H04H 20/10, H04H 20/26, H04H 40/18, H04H 60/58, H04H 60/65

(54) **Method and apparatus for selecting or removing audio component types**

(71) Applicant: Thomson Licensing, 92130 Issy-les-Moulineaux (FR)
(72) Inventor: Schmouker, Philippe, 35576 Cesson-Sévigné (FR); Chevallier, Louis, 35576 Cesson-Sévigné (FR); Ozerov, Alexey, 35576 Cesson-Sévigné (FR)
(74) Representative: Huchet, Anne

(57) **Abstract**

A method and an apparatus for selecting or removing one or more audio component types in an audio source associated with a video source at an electronic device are presented. For example, the present invention allows a user of an electronic device to selectively choose or remove, e.g., speech, music, and/or some other component type of an audio source for a selected video program at a receiver. In another embodiment, the selected audio source may be from another program.

## Description

### BACKGROUND OF THE INVENTION

### Field of the Invention

The present principles of the embodiments generally relate to a method and an apparatus for selecting or removing one or more audio component types in an audio source associated with a video source at an electronic device. For example, the present invention allows a user of an electronic device to selectively choose or remove, e.g., speech, music, and/or some other component type of an audio source for a selected video program at a receiver. In another embodiment, the selected audio source may be from another program.

### Background Information

Typically, a program such as a television program comprises both video content as well as audio content. In a typical sports program such as, e.g., figure skating competition, the audio content may further comprise different audio component types such as, e.g., speech of a sports announcer, sound of the accompanying music, and other sounds (e.g., ambience noise, background crowd noise, noise of the skating action on the ice), etc. The present inventors recognize that in certain instances, it would be advantageous for a user of an electronic device to be able to select a particular audio component type such as e.g., the accompanying music, or remove, e.g., boring comments from a TV announcer while watching the skating event. In addition, it would be advantageous to be able to, e.g., replace the boring TV announcer with another more entertaining announcer or a home-team announcer from another video program from another television channel or some other sources, if the same event is being simulcast on the other channel or streamed from the Internet. Additionally, the user may just want to watch the skating event with some other background music from another totally different program with no announcer voice at all.

### SUMMARY OF THE INVENTION

The present inventors recognize the needs for improvement to the existing electronic devices as described above. Therefore, an object of the present invention is to provide solutions to those needs in accordance with the principles of the present invention.

In accordance with an aspect of the present invention, an apparatus is presented, comprising:
a controller for controlling processing of a first video signal and a first audio signal;
an audio decoder for providing a plurality of audio component types in the first audio signal; and
wherein the audio decoder provides a first modified audio signal for the first video signal in response to selection of one or more of the plurality of audio component types.

In another embodiment, a method is presented comprising steps of:
receiving a first video signal and a first audio signal;
indicating to a user a plurality of audio component types available for selection in the first audio signal;
receiving a user command to select one or more of the available audio component types from the first audio signal to form a first modified audio signal; and
playing back the modified audio signal along with the first video signal.

In accordance with another aspect of the present invention, an apparatus is presented, comprising:
a controller for controlling processing of a first program having a first video signal and a first audio signal, and another program having another audio signal;
an audio decoder for providing a plurality of different audio component types in the received audio signals;
a user interface for receiving a user command to select one or more of the audio component types; and
wherein the audio decoder provides the modified audio signal for the first video signal from the selected one or more of the audio component types.

In another embodiment, a method is presented comprising steps of:
receiving a program having a first video signal and a first audio signal;
receiving another program having another audio signal;
indicating to a user a plurality of different audio component types available for selection in the received audio signals;
receiving a user command to select one or more of the available audio component types to form a modified audio signal; and
playing back the modified audio signal along with the first video signal.

In accordance with another aspect of the present invention, an apparatus is presented, comprising:
a controller for controlling processing of a plurality of programs;
an audio decoder for providing a plurality of audio component types from a plurality of audio sources of the pluralities of programs;
a video decoder for providing a display signal for displaying selected audio component types and indications from which respective programs the selected audio component types are to be found; and
the audio decoder provides a modified audio signal for a first program from one or more of the selected audio component types.

In another embodiment, a method is presented comprising steps of: receiving a first program;
displaying a plurality of audio component types associated with the program;
for a selected audio component type, receiving a user command for choosing which program the selected audio component type is to be found; and
forming a modified audio signal for the first program from one or more of the selected audio component types.

The aforementioned brief summary of exemplary embodiments of the present invention is merely illustrative of the inventive concepts presented herein, and is not intended to limit the scope of the present invention in any manner.

### DETAILED DESCRIPTION OF THE DRAWINGS

The above-mentioned and other features and advantages of this invention, and the manner of attaining them, will become more apparent and the invention will be better understood by reference to the following description of embodiments of the invention taken in conjunction with the accompanying drawings, wherein:
FIG. 1 shows a system according to an exemplary embodiment of the present invention;
FIG. 2 shows more details of an exemplary audio decoder according to the principles of the present invention;
FIG. 3 shows an exemplary user interface of an electronic device according to the principles of the present invention;
FIG. 4 shows another exemplary user interface of an electronic device according to the principles of the present invention;
FIG. 5 shows another exemplary user interface of an electronic device according to the principles of the present invention; and
FIG. 6 shows an exemplary process according to the principles of the present invention.

The examples set out herein illustrate exemplary embodiments of the invention. Such examples are not to be construed as limiting the scope of the invention in any manner.

### DETAILED DESCRIPTION

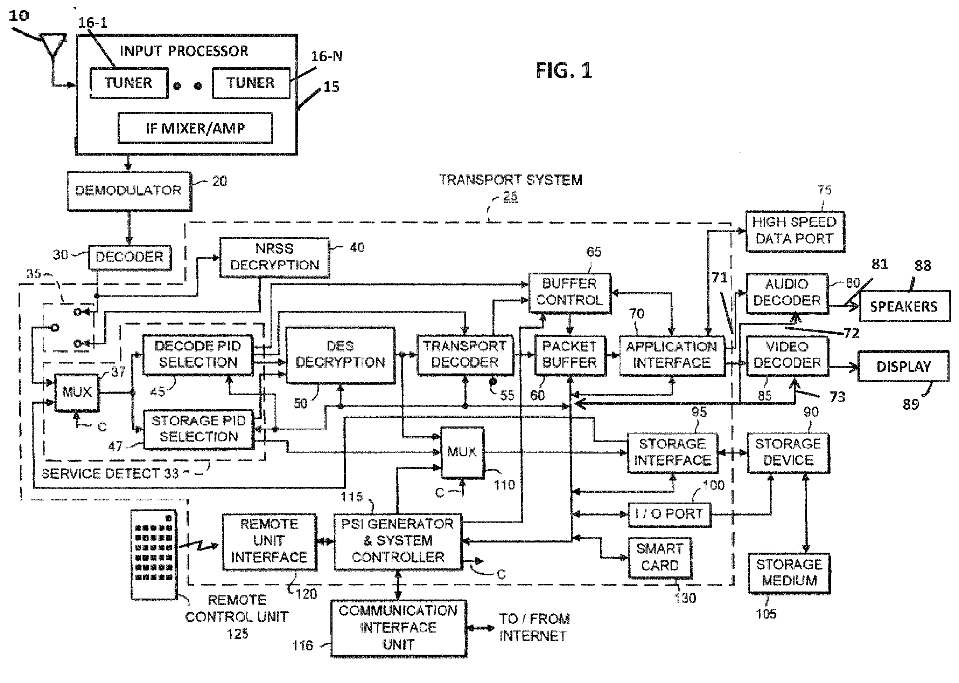

Referring now to the drawings, and more particularly to FIG. 1, FIG. 1 shows an exemplary embodiment of an electronic device capable of processing audio and video signals in accordance with the principles of the present invention. As described herein, the system shown in FIG. 1 is an MPEG compatible system for receiving MPEG encoded transport streams representing broadcast programs. MPEG compatible systems may include systems capable of processing, e.g., MPEG-1, MPEG-2, MPEG-4, or MPEG-4 Part 10 (H.264) compression encoded video signals. However, the system shown in FIG. 1 is exemplary only. Other non-MPEG compatible systems, involving systems capable of processing other types of encoded data streams may also be used according to the principles of the present invention.

Other exemplary devices may include mobile devices such as cellular telephones, tablets, PCs, or devices combining computer and television functions such as the so-called "PC/TVs". The term "program" as used herein represents any form of content data such as digital video and audio information, including streaming and stored data content received via cable, satellite, broadcast and other telecommunications networks, or via local networks or connections, such as WiFi, USB or Firewire connections. The content can be from a remote source (e.g., a server) or from a local source, such as from a local storage media (e.g., hard drives, memory cards or USB memory sticks, etc.)

As an overview, in the video receiver system of FIG. 1, a carrier modulated with video data is received by antenna 10 and processed by input processor unit 15. The resultant digital output signal is demodulated by demodulator 20 and decoded by decoder 30. The output from decoder 30 is processed by transport system 25 which is responsive to commands from remote control unit 125. System 25 provides compressed data outputs for storage, further decoding, or communication to other devices.

Video and audio decoders 85 and 80 respectively, decode the compressed data from system 25 to provide outputs for display 89 and speakers 88. Data port 75 provides an interface for communication of the compressed data from system 25 to/from other devices such as a computer or a High Definition Television (HDTV) receiver, for example. Storage device 90 stores compressed data from system 25 on storage medium 105. Device 90, in a playback mode also supports retrieval of the compressed or uncompressed video and audio data from storage medium 105 for processing by system 25 for decoding, communication to other devices or storage on a different storage medium (not shown to simplify drawing).

Considering FIG. 1 in detail, a carrier modulated with video and/or audio data, including e.g., digital radio data, received by antenna 10, is converted to digital form and processed by input processor 15. Input processor 15 includes one or more radio frequency (RF) tuners 16-1 to 16-N for tuning to one or more broadcast channels concurrently. The input processor 15 which comprises turners 16-1 to 16-N, intermediate frequency (IF) mixer and amplifier 17 then down-converts the input video signal to a lower frequency band suitable for further processing. The resultant digital output signal is demodulated by demodulator 20 and decoded by decoder 30. The output from decoder 30 is further processed by transport system 25.

Multiplexer (mux) 37 of service detector 33 is provided, via selector 35, with either the output from decoder 30, or the decoder 30 output is further processed by a descrambling unit 40. Descrambling unit 40 may be, for example, a removable unit such as a smart card in accordance with ISO 7816 and NRSS (National Renewable Security Standards) Committee standards (the NRSS removable conditional access system is defined in EIA Draft Document IS-679, Project PN-3639), or a CableCARD used in U.S. cable systems. Selector 35 detects the presence of an insertable, compatible, descrambling card and provides the output of unit 40 to mux 37 only if the card is currently inserted in the video receiver unit. Otherwise selector 35 provides the output from decoder 30 to mux 37. The presence of the insertable card permits unit 40 to descramble additional premium program channels, for example, and provide additional program services to a viewer. It should be noted that in the preferred embodiment NRSS unit 40 and smart card unit 130 (smart card unit 130 is discussed later) share the same system 25 interface such that only either an NRSS card or a smart card may be inserted at any one time. However, the interfaces may also be separate to allow parallel operation.

The data provided to mux 37 from selector 35 is in the form of an MPEG compliant packetized transport data stream as defined e.g., in MPEG2 Systems Standards ISO_IEC 13818-1 and may include program guide information and the data content of one or more program channels. The individual packets that comprise particular program channels are identified by Packet Identifiers (PIDs). The transport stream contains Program Specific Information (PSI) for use in identifying the PIDs and assembling individual data packets to recover the content of all the program channels that comprise the packetized data stream. Transport system 25, under the control of the system controller 115, acquires and collates program guide information from the input transport stream, storage device 90 or an Internet service provider via the communication interface unit 116. The individual packets that comprise either particular program channel content or program guide information, are identified by their Packet Identifiers (PIDs) contained within header information. Program guide information may contain descriptions for a program which may comprise different program descriptive fields such as title, star, rating, detailed event description, and etc., relating to a program.

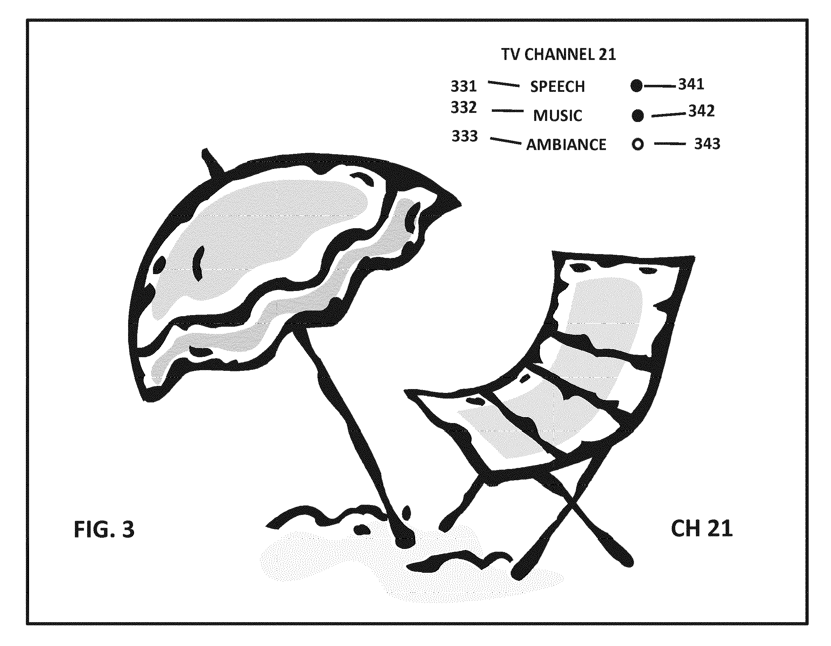

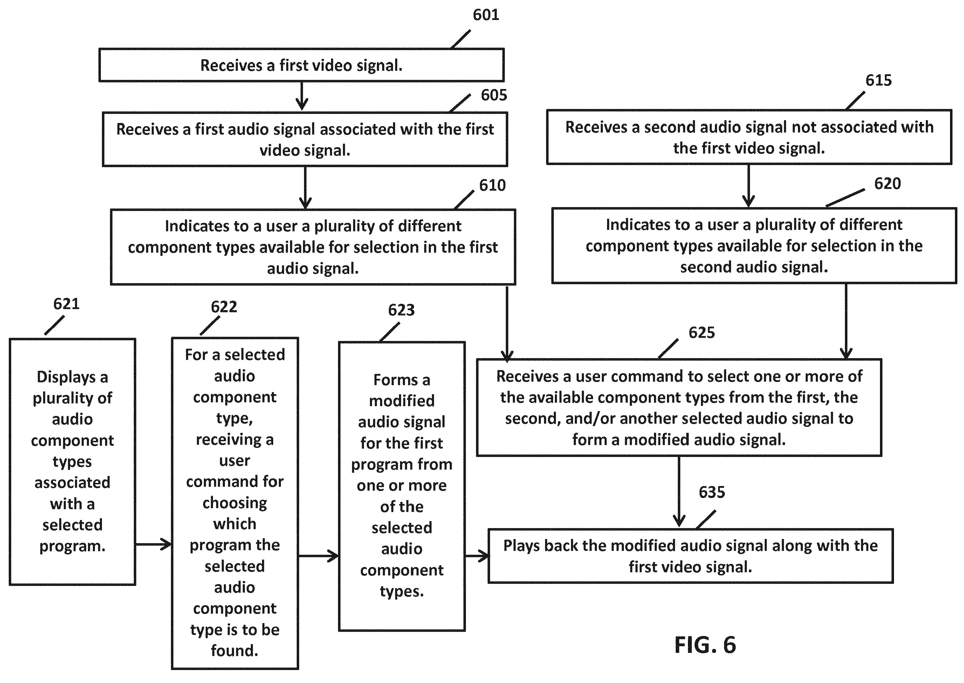

The user interface incorporated in the video receiver shown in FIG. 1 enables a user to activate various features by selecting a desired feature from an on-screen display (OSD) menu. The OSD menu includes an electronic program guide (EPG) as described above and other selectable user features according to the principles of the present invention, and to be described in more detail below in connection with FIGs. 3 to 6. Data representing information displayed in the OSD menu is generated by, e.g., system controller 115 in response to stored program guide information, stored graphics information, system and user interface control information as described herein and in accordance with an exemplary control program to be shown in FIG. 6 and to be described in detail below. The software control program may be stored, for example, in embedded memory of system controller 115, or other suitable memory (not shown) as well known by one skilled in the art.

Using remote control unit 125 (or other selection means such as a mouse, voice or other gesture activated devices, etc.) a user can select from the OSD menu items such as, for example, an icon to be selected, a plurality of audio component types to be selected, a program to be selected or viewed, a program to be stored or viewed from storage, the type of storage media and manner of storage, and scrolling of the EPG, etc.

A user is able to select or remove one or more of the audio component types of an audio source for a selected video program via remote control unit 125. System controller 115 uses the selection information, provided via remote unit interface 120, to configure the system shown in FIG. 1 for the selections. System controller 115 provides associated control information to audio decoder 80 and video decoder 85 via control signal paths 72 and 73 respectively to control their respective functions.

In addition, when a user selects programs for viewing or storage, system controller 115 generates PSI suitable for the selected storage device and media. Controller 115 also configures system 25 elements 45, 47, 50, 55, 65 and 95 by setting control register values within these elements via a data bus and by selecting signal paths via muxes 37 and 110 with control signal C.

In response to control signal C, mux 37 selects either, the transport stream from unit 35, or in a playback mode, a data stream retrieved from storage device 90 via store interface 95. In normal, non-playback operation, the data packets comprising the program that the user selected to view are identified by their PIDs by selection unit 45. If an encryption indicator in the header data of the selected program packets indicates the packets are encrypted, unit 45 provides the packets to decryption unit 50. Otherwise unit 45 provides non-encrypted packets to transport decoder 55. Similarly, the data packets comprising the programs that the user selected for storage are identified by their PIDs by selection unit 47. Unit 47 provides encrypted packets to decryption unit 50 or non-encrypted packets to mux 110 based on the packet header encryption indicator information.

The functions of decryptors 40 and 50 may be implemented in a single removable smart card which is compatible with the NRSS standard. This approach places all security related functions in one removable unit that easily can be replaced if a service provider decides to change encryption technique or to permit easily changing the security system, e.g., to descramble a different service.

Units 45 and 47 employ PID detection filters that match the PIDs of incoming packets provided by mux 37 with PID values pre-loaded in control registers within units 45 and 47 by controller 115. The pre-loaded PIDs are used in units 47 and 45 to identify the data packets that are to be stored and the data packets that are to be decoded for use in providing a video image. The pre-loaded PIDs are stored in look-up tables in units 45 and 47. The PID look-up tables are memory mapped to encryption key tables in units 45 and 47 that associate encryption keys with each pre-loaded PID. The memory mapped PID and encryption key look-up tables permit units 45 and 47 to match encrypted packets containing a pre-loaded PID with associated encryption keys that permit their decryption. Non-encrypted packets do not have associated encryption keys. Units 45 and 47 provide both identified packets and their associated encryption keys to decryptor 50. The PID look-up table in unit 45 is also memory mapped to a destination table that matches packets containing pre-loaded PIDs with corresponding destination buffer locations in packet buffer 60. The encryption keys and destination buffer location addresses associated with the programs selected by a user for viewing or storage are pre-loaded into units 45 and 47 along with the assigned PIDs by controller 115. The encryption keys are generated by ISO 7816-3 compliant smart card system 130 from encryption codes extracted from the input datastream. The generation of the encryption keys is subject to customer entitlement determined from coded information in the input datastream and/or pre-stored on the insertable smart card itself (International Standards Organization document ISO 7816-3 of 1989 defines the interface and signal structures for a smart card system).

The packets provided by units 45 and 47 to unit 50 are encrypted using an encryption techniques such as the Data Encryption Standard (DES) defined in Federal Information Standards (FIPS) Publications 46, 74 and 81 provided by the National Technical Information Service, Department of Commerce. Unit 50 decrypts the encrypted packets using corresponding encryption keys provided by units 45 and 47 by applying decryption techniques appropriate for the selected encryption algorithm. The decrypted packets from unit 50 and the non-encrypted packets from unit 45 that comprise the program for display are provided to decoder 55. The decrypted packets from unit 50 and the non-encrypted packets from unit 47 that comprise the program for storage are provided to mux 110.

Unit 60 contains four packet buffers accessible by controller 115. One of the buffers is assigned to hold data destined for use by controller 115 and the other three buffers are assigned to hold packets that are destined for use by application devices 75, 80 and 85. Access to the packets stored in the four buffers within unit 60 by both controller 115 and by application interface 70 is controlled by buffer control unit 65. Unit 45 provides a destination flag to unit 65 for each packet identified by unit 45 for decoding. The flags indicate the individual unit 60 destination locations for the identified packets and are stored by control unit 65 in an internal memory table. Control unit 65 determines a series of read and write pointers associated with packets stored in buffer 60 based on the First-In-First-Out (FIFO) principle. The write pointers in conjunction with the destination flags permit sequential storage of an identified packet from units 45 or 50 in the next empty location within the appropriate destination buffer in unit 60. The read pointers permit sequential reading of packets from the appropriate unit 60 destination buffers by controller 115 and application interface 70.

The non-encrypted and decrypted packets provided by units 45 and 50 to decoder 55 contain a transport header as defined by section 2.4.3.2 of the MPEG systems standard. Decoder 55 determines from the transport header whether the non-encrypted and decrypted packets contain an adaptation field (per the MPEG systems standard). The adaptation field contains timing information including, for example, Program Clock References (PCRs) that permit synchronization and decoding of content packets. Upon detection of a timing information packet, that is a packet containing an adaptation field, decoder 55 signals controller 115, via an interrupt mechanism by setting a system interrupt, that the packet has been received. In addition, decoder 55 changes the timing packet destination flag in unit 65 and provides the packet to unit 60. By changing the unit 65 destination flag, unit 65 diverts the timing information packet provided by decoder 55 to the unit 60 buffer location assigned to hold data for use by controller 115, instead of an application buffer location.

Upon receiving the system interrupt set by decoder 55, controller 115 reads the timing information and PCR value and stores it in internal memory. PCR values of successive timing information packets are used by controller 115 to adjust the system 25 master clock (27 MHz). The difference between PCR based and master clock based estimates of the time interval between the receipt of successive timing packets, generated by controller 115, is used to adjust the system 25 master clock. Controller 115 achieves this by applying the derived time estimate difference to adjust the input control voltage of a voltage controlled oscillator used to generate the master clock. Controller 115 resets the system interrupt after storing the timing information in internal memory.

Packets received by decoder 55 from units 45 and 50 that contain program content including audio, video, caption, and other information, are directed by unit 65 from decoder 55 to the designated application device buffers in packet buffer 60. Application control unit 70 sequentially retrieves the audio, video, caption and other data from the designated buffers in buffer 60 and provides the data to corresponding application devices 75, 80 and 85. The application devices comprise audio and video decoders 80 and 85 and high speed data port 75. For example, packet data corresponding to a composite program guide generated by the controller 115 as described above, may be transported to the video decoder 85 for formatting into video signal suitable for display on a display monitor 89 connected to the video decoder 85. Also, for example, data port 75 may be used to provide high speed data such as computer programs, for example, to a computer. Alternatively, port 75 may be used to output or receive data to and from an HDTV to display or process images corresponding to a selected program or a program guide, for example.

Packets that contain PSI information are recognized by unit 45 as destined for the controller 115 buffer in unit 60. The PSI packets are directed to this buffer by unit 65 via units 45, 50 and 55 in a similar manner to that described for packets containing program content. Controller 115 reads the PSI from unit 60 and stores it in internal memory.

Controller 115 also generates condensed PSI (CPSI) from the stored PSI and incorporates the CPSI in a packetized data stream suitable for storage on a selectable storage medium. The packet identification and direction is governed by controller 115 in conjunction with the unit 45 and unit 47 PID, destination and encryption key look-up tables and control unit 65 functions in the manner previously described.

In addition, controller 115 is coupled to a communication interface unit 116. Unit 116 provides the capability to upload and download information to and from the Internet. Communication interface unit 116 includes, for example, communication circuitry for connecting to an Internet service provider, e.g., via a wired or wireless connection such as an Ethernet, WiFi connection, or via cable, fiber or telephone line. The communication capability allows the system shown in FIG. 1 to provide, e.g., Internet related features such as streaming content and web browsing, in addition to receiving television and radio programming.

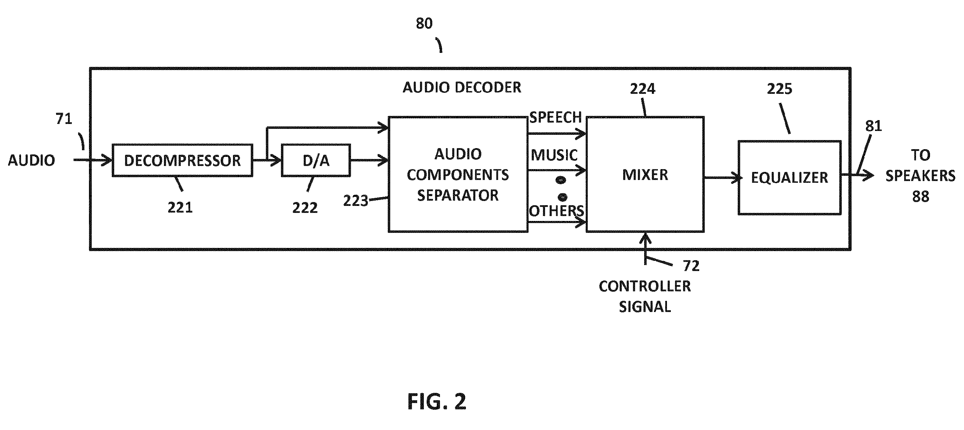

FIG. 2 is a detailed illustration of an exemplary audio decoder 80 shown in FIG. 1, according to principles of the present invention. Uncompressed audio signal from application interface 70 of FIG. 1 is input to a decompressor 221. The decompressed and decoded audio signal is then fed to a digital-to-analog converter 222 to convert the audio signal into analog form. Audio component types separator 223 separates the audio signal into different audio component types such as e.g., speech, music or other audio component types. Other component types may comprise, for example, ambience sound, background noise, sound related to a specific object such as when a player strikes a soccer ball, or when a basketball is being dribbled, etc.

A number of different detection techniques exist to detect and separate different audio component types in an audio source. In general, the existing techniques analyze tones in the received audio signal to determine whether or not music, speech, or another component is present. Most, if not all, of these tone-based detection techniques may be separated into two basic categories: (i) stochastic model-based techniques and (ii) deterministic model-based techniques. A discussion of stochastic model-based techniques may be found in, for example, Compure Company, "Music and Speech Detection System Based on Hidden Markov Models and Gaussian Mixture Models," a Public White Paper, http://www.compure.com. A discussion of deterministic model-based techniques may be found, for example, in U.S. Pat. No. 7,130,795. The teachings of both are incorporated herein by reference in their entirety.

In addition, US8554560, entitled "Voice Activity Detection" provides a further discussion of speech detection. Also, US Pat. App. Pub. No. 20120155655 A1, entitled "Music Detection based on Pause Analysis", provides a general discussion of audio component types detection and separation techniques, and also proposes another music detection technique based on pause and/or tone analysis. The teachings of both are also incorporated herein by reference in their entirety.

Based on existing techniques and teachings, one skilled in the art can readily appreciate and recognize that the audio component types separator 80 may be implemented in many different ways and employing many different techniques. The separator may be implemented in hardware, software, or a combination of hardware and software, for example, by using software-based filters, hardware-based filters, Digital Signal Processor (DSP), Programmable Logic Arrays (PLA), discrete components, software logics, etc., or a combination of any of the above. In addition, the input to the separator 80 may be in analog form (after D/A 222) or in digital form (before D/A 222). Both possibilities are shown in FIG. 2.

In addition, one person in the skilled can readily appreciate and recognize that FIG 2 shows an exemplary implement of an audio decoder for processing one audio source or one audio signal. An additional audio decoder 80 (e.g., working in parallel) may be needed for each additional audio source being processed. That is, for example, for a dual-tuner implementation of the present invention, two audio decoders 80 may be implemented, each for processing the respective real-time audio source acquired from the selected channel of each tuner.

According to one aspect of the present invention, a user is able to select one or more, or remove one or more audio component types using, for example, remote control unit 125. In response to the user selection of the audio component types, the system controller 115 generates the corresponding control signal to control a mixer 224 in FIG. 2. The control signal from the system controller 115 to audio decoder 80 is routed via control signal path 72 shown in both FIG. 1 and FIG. 2. The selectively mixed output audio signal with the user selected component types is optionally provided to an equalizer 225 to condition and equalize the modified audio signal before the audio signal is provided to the speakers 88 for play back.

In one embodiment, the mixer 224 has another set of audio component inputs associated with a program from another channel, from the Internet, or from a storage. In this embodiment, the system shown in FIG. 1 includes a multiplexer (not shown) to select the audio components from one of the channels, the Internet, and the storages, and a demultiplexer (not shown) for selecting one of the channels to forward the selected audio components.

FIG. 3 is an example of a user interface according to the principles of the present invention. As shown in FIG. 3, a display signal is provided to a display 89 by video decoder 85. The display signal contains the corresponding video content of a program being aired on a currently selected TV channel 21. In addition, the display signal comprises indications 331 - 333 of a plurality of audio component types available in the corresponding audio signal of the program. As described previously, various audio component types can be processed from an audio source other than the three types shown in FIG. 3. The three types shown in FIG.3 are merely examples for illustration purpose. More audio component types can be present to the user. Other audio component types may comprise, for example, background noise, sound related to a specific object, sound of a particular speaker, crowd noise, and etc.

A user can then select which audio component types he would like to listen to by, e.g., highlighting the respective selection icons 341 - 343. After the audio component types have been selected, system controller 115 sends the corresponding control signal via control signal path 72 to audio decoder 80 to provide the modified audio signal via mixer 224 and equalizer 225 to speakers 88 as described previously.

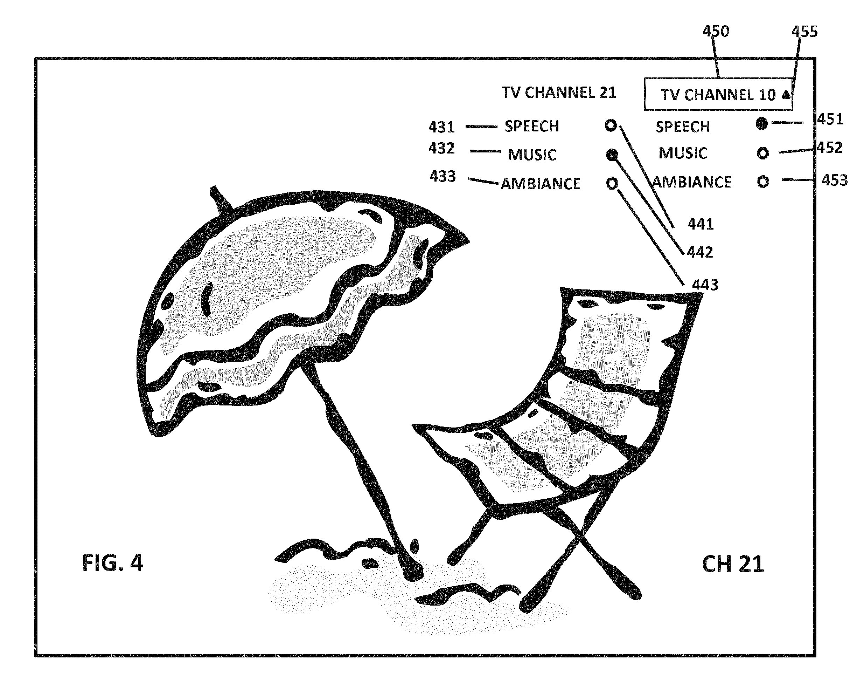

FIG. 4 is another example of a user interface according to the principles of the present invention. As shown in FIG 4, a display signal is provided to a display 89 by video decoder 85. The display signal contains the corresponding video content of a program being aired on a currently selected TV channel 21. In addition, the display signal comprises a first group of a plurality of audio component types 431 - 433 available in the corresponding audio signal of the current program on TV channel 21. Again, more audio component types may be presented to the user than the three audio component types shown in FIG. 4 for illustration purpose.

Similar to what has been shown and described in connection with FIG. 3, a user can select which audio component types he would like to keep and listen to, from the same audio signal of TV channel 21 by, e.g., highlighting the respective selection icons 441 - 443.

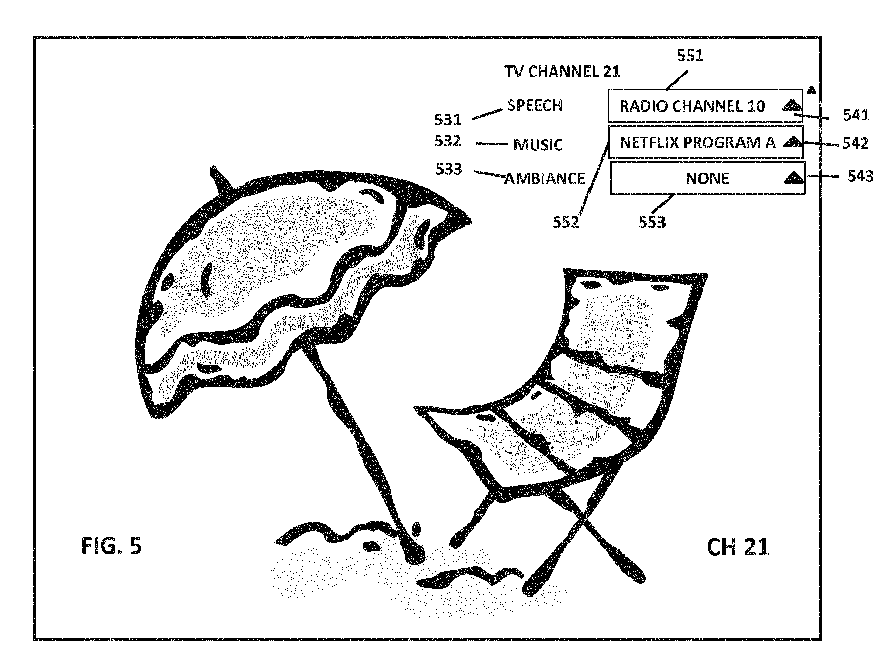

In addition, FIG. 4 provides an additional capability of allowing a user to select different audio component types from a different audio signal of another program. For example, a program selection field 450 is provided. When a user selects the selection icon 455, a plurality of possible program choices are displayed for possible selection by the user. For example, a possible program to be selected may be TV CHANNEL 10, as shown in FIG. 4, a radio channel RADIO CHANNEL 10 (e.g., 541 in FIG. 5), or an Internet streaming program NETFLIX PROGRAM A (e.g., 542 in FIG. 5). As noted above, program according to the principles of the present invention may be from different sources, networks, or storage media. After the user has made the selection of another program source using selection icon 455, the user can then select one or more of the audio component types from the original program and/or from the other selected program shown in field 450, as illustrated in FIG 4. When the audio component types have been finally selected by the user, system controller 115 provides the corresponding control signal to audio decoder 80 via control signal path 72 and to other involved components (such as but not limited the multiplexer and the demultiplxer for selecting another set of audio components to the mixer 224), and mixer 224 provides the modified audio signal to speakers 88 via equalizer 225 and signal path 81.

FIG. 5 is another example of a user interface according to the principles of the present invention. As shown in FIG 5, a display signal is provided to a display 89 by video decoder 85. The display signal contains the corresponding video content of a program being aired on a currently selected TV channel 21. In addition, the display signal comprises a plurality of audio component types 531 - 533 available for selection. The user is able to select a program which the corresponding audio component types 531 - 533 may be found or sourced via correspond selection icons 541 - 543. For example, for speech audio component type 531 of the current program, the user has instead selected the speech component type from the program corresponding to RADIO CHANNEL 10 551. Similarly, for the music component type 532, the user has selected NETFLIX PROGRAM A 552 from the Internet to provide the music component type substitute. In addition, if the user wants to eliminate an audio component type, he can choose NONE as shown in 553 of FIG. 5. FIG. 5 illustrates that the user has elected to remove the ambience audio component type by choosing NONE. Again, more audio component types may be presented to the user than the three audio component types shown in FIG. 5 for illustration purpose. When the audio component types have been selected by the user, system controller 115 provides the corresponding control signal to audio decoder 80 via control signal path 72 and to other involved components (such as but not limited the multiplexer and the demultiplxer for selecting another set of audio components to the mixer 224), and mixer 224 provides the modified audio signal to speakers 88.

FIG. 6 is a flow chart of an exemplary control program which, according to the present invention, may be executed by controller 115 of FIG. 1, or any other suitably programmed control arrangement of an electronic device. As mentioned previously, an exemplary electronic or apparatus according to the principles of the present invention is not limited to television receivers, but rather encompasses hybrids thereof (e.g., PC/TVs), cable television converter boxes, suitably equipped audiovisual program recorders (e.g., video tape recorders), satellite televisions and/or data signal converters, program guide receiver units, cell phones, tablets, personal computers and the like, regardless of whether incorporated into a television receiver or personal computer or connected externally thereto. It will be appreciated that the exemplary control program may be implemented in hardware, software, or a combination thereof.

The exemplary control program, when executed, facilitates display of user interface shown, for example, in FIGS. 3 - 5, and its interaction with a user. A person skilled in the art would readily recognize from the flow chart and the following description that the control program, for example, when executed by a system shown in FIG. 1 or any other suitably programmed electronic device will provide substantially the same features and advantages in accordance with the present invention. Therefore, to avoid redundancy, the control program will be described below only with respect to the exemplary hardware implementation shown in FIG. 1.

At step 601 of FIG. 6, the electronic apparatus as shown in FIG. 1 receives a first video signal corresponding to a first program. At step 605, the apparatus receives a first audio signal associated with the first video signal. At step 610, the apparatus indicates to a user a plurality of different component types available for selection in the first audio signal. At step 625, the apparatus receives a user command to select one or more of the available component types from the first audio signal to form a modified audio signal. Steps 601, 605, 610 and 625 described thus far correspond to associated user interface interactions illustrated in connection with FIG. 3. At step 635, the apparatus plays back the modified audio signal along with the first video signal.

In addition, at step 615 of FIG. 6, the electronic apparatus as shown in FIG. 1 receives a second audio signal not associated with the first video signal. At step 620, apparatus indicates to a user a plurality of different component types available for selection in the second audio signal. At step 625, the apparatus receives a user command to select one or more of the available component types from the first audio signal and/or the second audio signal to form a modified audio signal. Steps 601, 605, 610, 615, 620, and 625 also correspond to associated user interface interactions illustrated in connection with FIG. 4. At step 635, the apparatus plays back the modified audio signal along with the first video signal.

At step 621 of FIG. 6, the electronic apparatus as shown in FIG. 1 displays a plurality of audio component types associated with a selected program. At step 622, the apparatus, for a selected audio component type, receives a user command for choosing which program the selected audio component type is to be found. At step 623, the apparatus forms a modified audio signal for the first program from one or more of the selected audio component types. Steps 621, 622, and 623 described thus far also correspond to associated user interface interactions illustrated in connection with FIG. 5. At step 635, the apparatus plays back the modified audio signal along with the first video signal.

While this invention has been described as having a preferred design, the present is intended to cover any variations, uses, or adaptations of the invention using its general principles. Further, this application is intended to cover such departures from the present disclosure as come within known or customary practice in the art to which this invention pertains and which fall within the limits of the appended claims.

## Claims

1. An apparatus comprising:
a controller (115) for controlling processing of a first program having a first video signal and a first audio signal, and another program having another audio signal;
an audio decoder (80) for providing a plurality of different audio component types in the received audio signals;
a user interface (FIG. 3) for receiving a user command to select one or more of the audio component types; and
**characterized in that** the audio decoder provides the modified audio signal for the first video signal from the selected one or more of the audio component types.

2. The apparatus of claim 1 wherein the first program and the another program are respectively received from a first channel and a second channel, the second channel being different from the first channel.

3. The apparatus of claim 1 wherein the first program and the another program may be selected from one of: 1) television signal, 2) local storage device, 3) internet, 4) remote server, and 5) radio signal.

4. The apparatus of claim 1 wherein the audio component types comprise at least two of: 1) speech, 2) music, 3) ambience sound, 4) background noise, 5) sound related to a specific object, 6) sound of a particular speaker, and 7) crowd noise.

5. A method comprising steps of:
receiving (601, 605) a first video signal and a first audio signal;
indicating (610) to a user a plurality of audio component types available for selection in the first audio signal;
receiving (625) a user command to select one or more of the available audio component types from the first audio signal to form a first modified audio signal; and
playing (635) back the modified audio signal along with the first video signal.

6. The method of claim 5 further comprising:
receiving (615) a second audio signal,
indicating (620) to the user a plurality of audio component types available for selection in the second audio signal; and
receiving (625) a user command to select one or more of the available component types from the first or the second audio signal to form a second modified audio signal.
playing (635) back the second modified audio signal along with the first video signal after the selection.

7. The method of claim 6, wherein the first and second audio signals are respectively received from a first channel and a second channel, the second channel being different from the first channel.

8. The method of claim 5 wherein the audio component types comprise at least two of: 1) speech, 2) music, 3) ambience sound, 4) background noise, 5) sound related to a specific object, 6) sound of a particular speaker, and 7) crowd noise.

9. The method of claim 5, wherein the user selects fewer number of component types than the available component types in the first audio signal.

10. The method of claim 5, further comprising
equalizing the modified audio signal before the step of playing back.

11. The method of claim 5 wherein the user command is received from a remote control unit.

12. The method of claim 5 wherein the first and second audio signals are respectively received from one of: 1) television signal, 2) local storage device, 3) internet, 3) remote server, and 4) radio signal.
